# EUROPEAN PATENT SPECIFICATION

(11) **EP 4 374 435 B1**
(45) Date of publication and mention of the grant of the patent: **25.02.2026**
(21) Application number: 22747108.3
(22) Date of filing: 20.07.2022
(51) Int. Cl.: B01J 37/00, H01M 4/86, B01J 23/648, C25B 1/04, C25B 11/093, H01M 4/88, H01M 4/90, H01M 4/92, H01M 8/10

(54) **OXYGEN EVOLUTION REACTION CATALYST**
SAUERSTOFFENTWICKLUNGS-REAKTIONSKATALYSATOR
CATALYSATEUR DE RÉACTION DE DÉGAGEMENT D'OXYGÈNE

(30) Priority: 21.07.2021 GB 202110478
(43) Date of publication of application: 29.05.2024
(73) Proprietor: Johnson Matthey Hydrogen Technologies Limited, London EC2V 7AD (GB)
(72) Inventor: BLAKE, John, Swindon Wiltshire SN5 8AT (GB); BURTON, Sarah, Swindon Wiltshire SN5 8AT (GB); RALPH, Thomas Robertson, Swindon Wiltshire SN5 8AT (GB)
(74) Representative: Johnson Matthey Plc
(86) International application number: PCT/GB2022/051869
(87) International publication number: WO 2023/002177

(56) References cited:
- WO-A1-2005/049199
- WO-A1-2015/092371
- MARSHALL ET AL: "Performance of a PEM water electrolysis cell using Ir"xRu"yTa"zO"2 electrocatalysts for the oxygen evolution electrode", INTERNATIONAL JOURNAL OF HYDROGEN ENERGY, ELSEVIER, AMSTERDAM, NL, vol. 32, no. 13, 28 August 2007 (2007-08-28), pages 2320 - 2324, XP022216618, ISSN: 0360-3199, DOI: 10.1016/J.IJHYDENE.2007.02.013
- MAYOUSSE E ET AL: "Synthesis and characterization of electrocatalysts for the oxygen evolution in PEM water electrolysis", INTERNATIONAL JOURNAL OF HYDROGEN ENERGY, ELSEVIER, AMSTERDAM, NL, vol. 36, no. 17, 23 May 2011 (2011-05-23), pages 10474 - 10481, XP028259005, ISSN: 0360-3199, [retrieved on 20110531], DOI: 10.1016/J.IJHYDENE.2011.05.139
- GUZMÁN DANNY ET AL: "Mechanochemical processing of IrO2-Ta2O5: An alternative route for synthesizing Ir and Ir(Ta)O2 solid solution", vol. 60, no. 2, 17 February 2020 (2020-02-17), ES, pages 109 - 118, XP055905517, ISSN: 0366-3175, Retrieved from the Internet <URL:https://www.sciencedirect.com/science/article/pii/S0366317520300182/pdfft?md5=45951c37a182f963adde980e3d83493d&pid=1-s2.0-S0366317520300182-main.pdf> [retrieved on 20200217], DOI: 10.1016/j.bsecv.2020.01.010

## Description

### Field of the Invention

The present invention relates to an oxygen evolution reaction catalyst and particularly, although not exclusively, to a ternary oxide catalyst material suitable for use in an electrochemical fuel cell.

### Background

A fuel cell is an electrochemical cell comprising two electrodes separated by an electrolyte. A fuel, e.g. hydrogen, an alcohol such as methanol or ethanol, or formic acid, is supplied to the anode and an oxidant, e.g. oxygen or air, is supplied to the cathode. Electrochemical reactions occur at the electrodes, and the chemical energy of the fuel and the oxidant is converted to electrical energy and heat. Electrocatalysts are used to promote the electrochemical oxidation of the fuel at the anode and the electrochemical reduction of oxygen at the cathode.

Fuel cells are usually classified according to the nature of the electrolyte employed. Often the electrolyte is a solid polymeric membrane, in which the membrane is electronically insulating but ionically conducting. In the proton exchange membrane fuel cell the membrane is proton conducting, and protons, produced at the anode, are transported across the membrane to the cathode, where they combine with oxygen to form water.

A principal component of the proton exchange membrane fuel cell is the membrane electrode assembly, which is essentially composed of five layers. The central layer is the polymer ion-conducting membrane. On either side of the ion-conducting membrane there is an electrocatalyst layer, containing an electrocatalyst designed for the specific electrolytic reaction. Finally, adjacent to each electrocatalyst layer there is a gas diffusion layer. The gas diffusion layer must allow the reactants to reach the electrocatalyst layer and must conduct the electric current that is generated by the electrochemical reactions. Therefore, the gas diffusion layer must be porous and electrically conducting. The membrane electrode assembly can be constructed by several methods. The electrocatalyst layer may be applied to the gas diffusion layer to form a gas diffusion electrode. Two gas diffusion electrodes can be placed either side of an ion-conducting membrane and laminated together to form the five-layer membrane electrode assembly. Alternatively, the electrocatalyst layer may be applied to both faces of the ion-conducting membrane to form a catalyst coated ion-conducting membrane. Subsequently, gas diffusion layers are applied to both faces of the catalyst coated ion-conducting membrane. Finally, a membrane electrode assembly can be formed from an ion-conducting membrane coated on one side with an electrocatalyst layer, a gas diffusion layer adjacent to that electrocatalyst layer, and a gas diffusion electrode on the other side of the ion-conducting membrane.

Typically tens or hundreds of membrane electrode assemblies s are required to provide enough power for most applications, so multiple membrane electrode assemblies are assembled to make up a fuel cell stack. Field flow plates are used to separate the membrane electrode assemblies. The plates perform several functions: supplying the reactants to the membrane electrode assemblies, removing products, providing electrical connections and providing physical support.

It is known that there are a number of situations where incorporating a water electrolysis catalyst into a fuel cell at either the anode or the cathode can prove beneficial. For example, WO01/15247 describes how incorporating an additional or second catalyst composition at the anode for purposes of electrolysing water can improve tolerance of a fuel cell to cell voltage reversal. Cell voltage reversal can occur if a cell receives an inadequate supply of fuel (for example, as a result of fuel starvation). If this occurs, reactions other than fuel oxidation may take place at the fuel cell anode, including water electrolysis and oxidation of anode components. Oxidation of anode components is undesirable as this can result in significant degradation of the anode. By incorporating a catalyst composition at the anode which promotes the oxygen evolution reaction, degradation of the anode can be reduced or avoided, by promotion of water electrolysis over anode component oxidation.

Another example of a situation in which promotion of water electrolysis may be beneficial is for fuel cells where it is it is also not practical or economic to provide purging of hydrogen from the anode gas space with an inert gas such as nitrogen during shut down, or when a cell is re-started after being idle for some time. Both of these situations can result in a mixed composition of hydrogen and air on the anode whilst air is present on the cathode. Under these circumstances an internal cell can exist, as described by Tang et al (Journal of Power Sources 158 (2006) 1306-1312), which leads to high potentials on the cathode. The high potentials can cause carbon to oxidise which is highly damaging to the structure of the catalyst layer where the catalyst layer contains carbon. If the cathode layer is able to support oxygen evolution however, the high potentials can be used to drive water electrolysis rather than carbon corrosion.

Finally, in regenerative fuel cells, the electrodes are bi-functional and both anode and cathode must support two electrochemical reaction types at different times. When operating as a fuel cell the cathode must reduce oxygen and the anode oxidise hydrogen; when operating as an electrolyser the cathode must evolve hydrogen and the anode evolve oxygen. It may therefore be beneficial to incorporate both a traditional hydrogen oxidation reaction catalyst and an oxygen evolution reaction catalyst in the anode of such a fuel cell, because with such an arrangement, the anode can carry out both the hydrogen oxidation and oxygen evolution reactions effectively.

Various electrocatalysts for the oxygen evolution reaction are known in the art. For example, WO11/021034 discloses catalyst layers comprising an electrocatalyst and an oxygen evolution reaction catalyst, wherein the oxygen evolution reaction catalyst comprises iridium or iridium oxide and one or more metals M or an oxide thereof, wherein M is selected from the group consisting of transition metals and Sn, with the exception of ruthenium.

Document Marshall et al., Int. J. of Hydrogen Energy, vol. 32, no. 13, 28.08.2007, pages 2320-2324, discloses the performance of a PEM water electrolysis cell using IrₓRu_{y}Ta_{z}O₂ electrocatalysts (with 20 to 40 at% Ru) for the oxygen evolution electrode. It further discloses that the best result was obtained with an Ir_{0.6}Ru_{0.4}O₂, anode (thus without any tantalum and a high Ru content) and 20 wt% Pt/C cathode.

However, the provision of improved oxygen evolution reaction catalysts is desirable, and particularly the provision of catalysts which can improve the stability of membrane electrode assemblies during repeated reversal events. Furthermore, iridium is scarce, which can make it expensive, and so it would be desirable to provide catalyst materials exhibiting similar performance to known catalysts, but which use less iridium.

The present invention has been devised in light of the above considerations.

### Summary of the Invention

The present inventors have found that a ternary oxide can overcome one or more of the problems set out above.

Accordingly, in a first aspect, the present invention provides an oxygen evolution reaction catalyst, wherein the oxygen evolution reaction catalyst is an oxide material comprising iridium, tantalum and ruthenium:
wherein the oxygen evolution catalyst comprises a crystalline oxide phase having the rutile crystal structure;
wherein the crystalline oxide phase has a lattice parameter a of greater than 4.510 Å;
wherein the crystalline oxide phase is a single oxide structure comprising iridium, tantalum and ruthenium; and
wherein ruthenium is present in an amount in the range of and including 1 to 15 atomic % based on the total atomic percent of iridium, tantalum and ruthenium species in the oxygen evolution reaction catalyst; and wherein iridium is present in an amount of less than 70 atomic % based on the total atomic composition of iridium, tantalum and ruthenium species in the oxygen evolution reaction catalyst.

Iridium may be present in an amount of at least 50 atomic % based on the total atomic composition of iridium, tantalum and ruthenium species in the oxygen evolution reaction catalyst. Preferably, iridium is present in an amount of at most 65 atomic % based on the total atomic composition of iridium, tantalum and ruthenium species in the oxygen evolution reaction catalyst.

Tantalum may be present in an amount in the range of and including 10 to 40 atomic % based on the total atomic composition of iridium, tantalum and ruthenium species in the oxygen evolution reaction catalyst. Preferably, tantalum is present in an amount of at least 15 atomic % based on the total atomic percent of iridium, tantalum and ruthenium species in the oxygen evolution reaction catalyst. Preferably, tantalum is present in an amount of at most 35 atomic % based on the total atomic composition of iridium, tantalum and ruthenium species in the oxygen evolution reaction catalyst.

Preferably, ruthenium is present in an amount of at least 5 atomic % based on the total atomic percent of iridium, tantalum and ruthenium species in the oxygen evolution reaction catalyst.

The amount of iridium, tantalum and ruthenium is determined by the molar amount of iridium, tantalum and ruthenium included in preparation of the material and can be confirmed using inductively coupled plasma mass spectrometry (ICPMS).

The present inventors have found that an oxygen evolution reaction catalyst having a composition as set out above can provide a membrane electrode assembly having suitable activity, whilst providing increased stability and being thrifted in iridium, in comparison to some known oxygen evolution reaction catalysts. In particular in comparison to binary mixed metal oxide oxygen evolution reaction catalysts such as IrTa-based materials, or Rulr-based materials.

The oxygen evolution reaction catalyst may optionally comprise metal species other than iridium, tantalum, and ruthenium for example in an amount up to and including 5 atomic % based on the total atomic composition of metal species in the oxygen evolution reaction catalyst, suitably up to and including 1 atomic % based on the total atomic composition of metal species in the oxygen evolution reaction catalyst. Preferably, iridium, tantalum and ruthenium constitute substantially all of the metal species present in the oxygen evolution reaction catalyst. Put another way, the metal species in the oxygen evolution reaction catalyst consist essentially of, preferably consist of, iridium, tantalum and ruthenium. The ratio of total iridium, tantalum and ruthenium to oxygen is typically about 1:2. The oxygen evolution reaction catalyst may optionally comprise metal species in the metallic form, for example in an amount up to and including 5 atomic % based on the total atomic composition of metal species in the oxygen evolution reaction catalyst, suitably up to and including 1 atomic % based on the total atomic composition of metal species in the oxygen evolution reaction catalyst. Such metal species in the metallic form may comprise iridium and/or tantalum.

The crystalline oxide phase has the rutile MO₂ (M being a metal species) structure. Phase identification is conducted by comparing the X-ray diffraction pattern with a reference to the PDF-4+ database, Release 2021. The material contains a single crystalline oxide phase with reflection intensities which are consistent with a rutile MO₂ phase but reflection positions which do not match IrO₂. Put another way, the crystalline oxide phase may be a single oxide structure comprising iridium, tantalum and ruthenium. The crystalline oxide phase may be described as IrₓTa_{y}Ru_{z}O₂ where x + y + z = 1. For example, x may be 0.50 to 0.70, y may be 0.20 to 0.40 and z may be 0.05 to 0.15. In particular, x may be 0.55 to 0.65, y may be 0.25 to 0.35 and z may be 0.08 to 0.12.

The lattice parameter a of the crystalline oxide phase is preferably greater than 4.550 Å. The upper limit for the lattice parameter a is not particularly limited but a is typically less than 4.800 Å, preferably less than 4.750 Å, more preferably less than 4.650 Å. For example, the lattice parameter a may be about 4.567 Å. The lattice parameter c of the crystalline oxide phase may be greater than 3.120 Å, preferably greater than 3.140 Å. The upper limit for the lattice parameter c is not particularly limited but c is typically less than 3.180 Å, suitably less than 3.160 Å. For example, the lattice parameter c may be about 3.158 Å. The values provided for the lattice parameters a and c are obtained at ambient temperature i.e. about 25 °C. Powder X-ray diffraction (PXRD) data is collected in reflection geometry using a Bruker AXS D8 diffractometer using Cu Kα radiation (A = 1.5406 + 1.54439 Å) over the 10 < 2θ < 130° range in 0.04° steps. To extract lattice parameters, Pawley refinements are performed using Topas [1] with reflection profiles modelled using a fundamental parameters approach [2] with reference data collected from NIST660 LaB₆. The data is fitted from 20 to 77 ° 2Θ using a Pawley model in *P*4₂/*mnm* (the same space group as IrO₂) to extract the lattice parameters. For comparison rutile crystal phase parameters have been described for IrO₂ (a = 0.4498nm) and RuO₂ (a = 0.4491nm).

The crystalline oxide phase may have a crystallite size calculated from the (011) *hkl* reflection in the range of and including 6.0 nm to 16.0 nm, suitably 8.0 nm to 14.0 nm, preferably 10.0 nm to 12.0 nm. Powder X-ray diffraction (PXRD) data were collected in reflection geometry using a Bruker AXS D8 diffractometer using Cu Kα radiation (A = 1.5406 + 1.54439 Å) over the 10 < 2θ < 130° range in 0.04° steps. Peak phase refinements are performed using Topas [1] with reflection profiles modelled using a fundamental parameters approach [2] with reference data collected from NIST660 LaB₆. The reflections from the rutile phase are fitted using a set of peaks with independent sample broadening to obtain crystallite sizes along the crystallographic planes. Crystallite size is calculated using the volume weighted column height LVol-IB method. [3]

The oxygen evolution reaction catalyst may comprise an amorphous phase, suitably an amorphous oxide phase e.g. an oxide of tantalum, typically tantalum pentoxide Ta₂O₅. However, the oxide material is predominantly the crystalline oxide phase. Suitably, the degree of crystallinity, i.e. the ratio of areas between crystalline oxide and amorphous phases, of the oxygen evolution reaction catalyst is at least 90%, preferably at least 95%. Powder X-ray diffraction (PXRD) data were collected in reflection geometry using a Bruker AXS D8 diffractometer using Cu Kα radiation (A = 1.5406 + 1.54439 Å) over the 10 < 2θ < 130° range in 0.04° steps. For the determination of the degree of crystallinity, X-ray scattering data from the crystalline oxide and amorphous phases are fitted from 20 to 77 ° 2Θ. The summed area from peaks modelling contributions from the crystalline phase and from the total X-ray scattering are used to calculate the percentage scattering. Most preferably, substantially all of the oxide material is the crystalline oxide phase.

The oxygen evolution reaction catalyst may have a BET surface area of at least 30 m²/g, as determined based on the N₂ adsorption isotherm at 77K, according to ISO standard 9277:2010(en). Preferably, the BET surface area is at least 35 m²/g, more preferably at least 40 m²/g. Providing increased BET surface area can improve catalytic performance of the material. The upper limit of surface area is not particularly limited, an example being 200 m²/g.

In a second aspect, the present invention provides a method of synthesis of the oxygen evolution reaction catalyst according to the invention, the method comprising steps of:
providing an aqueous solution of compounds of iridium, tantalum and ruthenium;
spray drying the solution to form a dry powder; and
subjecting said powder to calcination to thereby form the oxygen evolution reaction catalyst.

The step of providing an aqueous solution of compounds of iridium, tantalum and ruthenium may comprises sub-steps of:
providing an aqueous solution of a compound of iridium and a compound of ruthenium; and
mixing said aqueous solution with an aqueous solution of a compound of tantalum.

The iridium compound, tantalum compound and ruthenium compound may be provided in amounts suitable to give the desired ratio of iridium to tantalum to ruthenium, e.g. in a molar ratio of Ir:Ta:Ru of around 6:3:1. In making the oxygen evolution reaction catalyst, a calcination step is used. The calcination step may be a single calcination step. Alternatively, a two-stage calcination process may be used, where the powder is subjected to calcination for a first specified time period, and is subsequently subjected to further calcination for a second specified time period. The first and second calcination steps may take place at the same temperature, or they may take place at different temperatures. The single calcination step and the specified calcination time periods specified may be performed at a temperature of about 400 °C to about 800 °C, preferably about 500 °C to about 700 °C. The first and second time periods may be the same, or they may be different. The length of the single calcination step, the first specified time period and the second specified time period for calcination may suitably be 1 hour or more, typically 3 hours or more. The length of the single calcination step, the first specified time period and the second specified time period for calcination may suitably be at most 10 hours.

Optionally, additional processing steps may be performed between the first calcination step and the second calcination step, for example the powder may undergo stirring or milling. This has the advantage that agglomerates can be broken up before the second calcination step, allowing for more even calcination. However, the first and second calcination steps may be performed successively, with no further processing steps being performed between the first calcination step and the second calcination step.

Calcination may be performed in a suitable gaseous atmosphere, for example in air, N₂, Ar, He, CO₂, CO, O₂, H₂, and mixtures thereof. Preferably, calcination is performed in an air atmosphere.

The oxygen evolution reaction catalyst of the invention may find application in various electrochemical applications. However, one particularly preferred application is in an electrochemical fuel cell.

In a third aspect, the present invention provides a catalyst layer comprising the oxygen evolution reaction catalyst according to the invention and a second electrocatalyst material. In this instance the oxygen evolution reaction catalyst of the invention is the first electrocatalyst.

The second electrocatalyst material may suitably be selected from:
(i) the platinum group metals (platinum, palladium, rhodium, ruthenium, iridium and osmium);
(ii) gold or silver;
(iii) a base metal;
or an alloy or mixture comprising one or more of these metals or their oxides. A base metal is tin or a transition metal which is not a noble metal. A noble metal is a platinum group metal (platinum, palladium, rhodium, ruthenium, iridium or osmium) or gold. Preferred base metals are copper, cobalt, nickel, zinc, iron, titanium, molybdenum, vanadium, manganese, niobium, tantalum, chromium and tin.

The second electrocatalyst material preferably does not comprise iridium or tantalum. Preferably, the second electrocatalyst material is a fuel cell anode or cathode, preferably anode, electrocatalyst material. Typically, the second electrocatalyst material comprises a platinum group metal other than iridium or an alloy of a platinum group metal other than iridium, preferably with a base metal, preferred base metals as defined above. In particular, the second electrocatalyst material comprises platinum or an alloy of platinum with a base metal, preferred base metals as defined above, more preferably titanium, vanadium, chromium, niobium or tantalum. Alternatively preferably, the second electrocatalyst material may comprise an alloy of platinum with another platinum group metal, preferably rhodium or ruthenium.

Preferably, the catalyst layer is an anode catalyst layer, preferably an anode catalyst layer for a proton exchange membrane fuel cell.

The loading of the primary metal, e.g. the platinum group metal as defined herein, of the second electrocatalyst material in the catalyst layer may be selected based on the intended use of the catalyst layer, and in particular, based on whether the catalyst layer is intended for use at the anode, or at the cathode. For use at an anode, preferably for a proton exchange membrane fuel cell, the loading for primary metal, e.g. platinum group metal as defined herein, in the catalyst layer may suitably be from 0.02 to 0.2 mg/cm², typically 0.02 to 0.15 mg/cm², preferably 0.02 to 0.1 mg/cm².

The second electrocatalyst material is preferably in the form of particles which may be supported, or unsupported. The term "supported" will be readily understood by a skilled person. For example, it will be understood that the term "supported" means that the electrocatalyst particles are dispersed on the support material and bound or fixed to the support material by physical or chemical bonds. For instance, the electrocatalyst may be bound or fixed to the support material by way of ionic or covalent bonds, or non-specific interactions such as van der Waals forces.

The oxygen evolution reaction catalyst of the invention is preferably in the form of particles which may be supported or unsupported, preferably unsupported. The oxygen evolution reaction catalyst of the invention is preferably in the form of particles dispersed in the catalyst layer.

Where particles are supported, the support material may be an electrically conductive carbon support material. Suitably, the support material is a carbon powder which may be, for example, a carbon black or graphitised carbon black for example a commercially available carbon black (such as from Cabot Corp. (Vulcan^{®} XC72R) or Akzo Nobel (the Ketjen^{®} black series)). Another suitable carbon support material is an acetylene black (e.g. those available from Chevron Phillips (Shawinigan Black^{®}) or Denka). The support material may also be an electrically conductive carbon support material specifically designed for use in a fuel cell, such as those described in WO2013/045894. Alternatively, the support material may be a non-carbonaceous material. Examples of such a support material include titania, niobia, tantala, tungsten carbide, hafnium oxide or tungsten oxide. Such oxides and carbides may also be doped with other metals to increase their electrical conductivity, for example niobium doped titania.

The oxygen evolution reaction catalyst of the invention and the second electrocatalyst material may be supported on the same support material or a different support material.

The weight ratio of the oxygen evolution reaction catalyst of the invention to the second electrocatalyst material in the catalyst layer may be from 10:1 to 1:10. The weight ratio may be selected depending on whether the catalyst layer is intended for use at the anode or at the cathode. In the case of an anode catalyst layer, preferably for a proton exchange membrane fuel cell, the weight ratio is suitably at least 0.5:1, preferably at least 0.75:1. The weight ratio is suitably at most 10:1, preferably at most 5:1, more preferably at most 2:1, yet more preferably at most 1:1. In the case of a cathode catalyst layer, preferably for a proton exchange membrane fuel cell, the weight ratio is suitably from 1:1 to 1:10, preferably from 1:2 to 1:5.

The catalyst layer may comprise further components in addition to the oxygen evolution reaction catalyst according to the invention and the second electrocatalyst material. Such components include, but are not limited to: an ion-conducting polymer, such as a proton conducting polymer, included to improve the ionic conductivity within the layer; a hydrogen peroxide decomposition catalyst; a hydrophobic additive (e.g. a polymer such as polytetrafluoroethylene (PTFE) or an inorganic solid with or without surface treatment) or a hydrophilic additive (e.g. a polymer of an inorganic solid, such as an oxide) to control reactant and water transport characteristics. The choice of additional components will depend on whether the catalyst layer is for use at the anode or the cathode and it is within the capability of a skilled person to determine which additional components are appropriate.

To prepare the catalyst layer, the oxygen evolution reaction catalyst of the invention, supported or unsupported, and the second electrocatalyst material, supported or unsupported, and any additional components can be dispersed in an aqueous and/or organic solvent to prepare a catalyst ink. If required, particle break-up may be carried out by methods known in the art, such as high shear mixing, milling, ball milling, passing through a microfluidiser etc. or a combination thereof, to achieve a suitable particle size distribution. After preparation of the catalyst ink, the ink may be deposited onto a substrate (e.g. gas diffusion layer, ion-conducting membrane or a carrier/transfer substrate) to form the catalyst layer. The ink may be deposited by any suitable technique known to those in the art, including but not limited to gravure coating, slot die (slot, extrusion) coating, screen printing, rotary screen printing, inkjet printing, spraying, painting, bar coating, pad coating, gap coating techniques such as knife or doctor blade over roll, and metering rod application.

When the catalyst layer is deposited onto a carrier/transfer substrate, by coating of a catalyst ink onto the carrier/transfer substrate, it forms a catalysed carrier/transfer substrate. The carrier/transfer substrate is intended to be removed from the layer in a subsequent step. For example, the catalyst layer may be transferred, by decal transfer, to a gas diffusion layer or ion-conducting membrane, the carrier/transfer substrate being removed immediately after, or at some point after, the transfer process.

Additional layers may be deposited on the exposed face of the catalyst layer prior to removal of the carrier/transfer substrate; for example, an ion-conducting ionomer layer may be applied from a dispersion of ionomer using any suitable deposition technique known as described above in relation to deposition of the catalyst layer. Further additional layers can be added as required, for example as described in PCT Patent Application No. GB2015/050864. The carrier/transfer substrate is removed from the catalyst layer at an appropriate time. The carrier/transfer substrate may be formed from any suitable material from which the catalyst layer can be removed without damage thereto. Examples of suitable materials include a fluoropolymer, such as polytetrafluoroethylene (PTFE), ethylene tetrafluoroethylene (ETFE), perfluoroalkoxy polymer (PFA), fluorinated ethylene propylene (FEP - a copolymer of hexafluoropropylene and tetrafluoroethylene) and polyolefins, such as biaxially oriented polypropylene (BOPP).

The characteristics of the catalyst layer, such as the thickness, electrocatalyst loading, porosity, pore size distribution, average pore size and hydrophobicity will depend on whether it is being used at the anode or cathode. The catalyst layer thickness may suitably be at least 1 µm, typically at least 5 µm. The catalyst layer thickness may suitably be no more than 15 µm, typically no more than 10 µm.

In a fourth aspect, the present invention provides a gas diffusion electrode comprising a gas diffusion layer and a catalyst layer according to the third aspect.

Preferably, the catalyst layer is directly adjacent the gas diffusion layer. This may be achieved by e.g. depositing the catalyst layer directly onto the gas diffusion layer. The gas diffusion layer may be based on or comprise conventional gas diffusion substrates. Typical substrates include non-woven papers or webs comprising a network of carbon fibres and a thermoset resin binder (e.g. the TGP-H series of carbon fibre paper available from Toray Industries Inc., Japan or the H2315 series available from Freudenberg FCCT KG, Germany, or the Sigracet^{®} series available from SGL Technologies GmbH, Germany or AvCarb^{®} series from Ballard Power Systems Inc.), or woven carbon cloths. The carbon paper, web or cloth may be provided with a pre-treatment prior to fabrication of the electrode and being incorporated into a membrane electrode assembly either to make it more wettable (hydrophilic) or more wet-proofed (hydrophobic). The nature of any treatments will depend on the type of fuel cell and the operating conditions that will be used. The substrate can be made more wettable by incorporation of materials such as amorphous carbon blacks via impregnation from liquid suspensions, or can be made more hydrophobic by impregnating the pore structure of the substrate with a colloidal suspension of a polymer such as PTFE or polyfluoroethylenepropylene (FEP), followed by drying and heating above the melting point of the polymer. For applications such as the proton exchange membrane fuel cell, a microporous layer may also be applied to the gas diffusion substrate on the face that will contact the catalyst layer. The microporous layer typically comprises a mixture of a carbon black and a polymer such as polytetrafluoroethylene (PTFE).

In a fifth aspect, the present invention provides a catalysed membrane comprising an ion-conducting membrane and a catalyst layer according to the third aspect.

Here, the catalyst layer is deposited onto an ion-conducting membrane, either by direct coating of a catalyst ink onto the membrane, or indirectly by transfer from a carrier or transfer substrate, to form a catalyst coated membrane. The ion-conducting membrane may be any membrane suitable for use in a proton exchange membrane fuel cell, for example the membrane may be based on a perfluorinated sulphonic acid material such as Nafion^{™} (Chemours Company), Aquivion^{®} (Solvay Specialty Polymers), Flemion^{®} (Asahi Glass Group) and Aciplex^{™} (Asahi Kasei Chemicals Corp.). Alternatively, the membrane may be based on a sulphonated hydrocarbon membrane such as those available from FuMA-Tech GmbH as the fumapem^{®} P, E or K series of products, JSR Corporation, Toyobo Corporation, and others. Alternatively, the membrane may be based on polybenzimidazole doped with phosphoric acid which will operate in the range 120 °C to 180 °C.

The ion-conducting membrane component may comprise one or more materials that confer mechanical strength to the ion-conducting membrane component. For example, the ion-conducting membrane component may contain a porous reinforcing material, such as an expanded PTFE material or a nanofibre network, such as an electro-spun fibre network.

The ion-conducting membrane may comprise one or more hydrogen peroxide decomposition catalysts either as a layer on one or both faces of the membrane, or embedded within the membrane, either uniformly dispersed throughout or in a layer. Examples of the hydrogen peroxide decomposition catalyst suitable for use are known to those skilled in the art and include metal oxides, such as cerium oxides, manganese oxides, titanium oxides, beryllium oxides, bismuth oxides, tantalum oxides, niobium oxides, hafnium oxides, vanadium oxides and lanthanum oxides; suitably cerium oxides, manganese oxides or titanium oxides; preferably cerium dioxide (ceria).

The ion-conducting membrane component may optionally comprise a recombination catalyst, in particular a catalyst for the recombination of unreacted H₂ and O₂, that can diffuse into the membrane from the anode and cathode respectively, to produce water. Suitable recombination catalysts comprise a metal (such as platinum) on a high surface area oxide support material (such as silica, titania, zirconia). More examples of recombination catalysts are disclosed in EP0631337 and WO00/24074.

In a sixth aspect, the present invention provides a membrane electrode assembly comprising a catalyst layer according to the third aspect, a gas diffusion electrode according to the fourth aspect or a catalysed membrane according to the fifth aspect.

As a skilled person will understand, a membrane electrode assembly can be constructed by a number of methods, providing it contains at least one catalyst layer. For example, the membrane electrode assembly may comprise a catalyst coated ion-conducting membrane which comprises two catalyst layers at least one of which is a catalyst layer of the invention, with a gas diffusion layer applied to each catalyst layer. Alternatively, the membrane electrode assembly may comprise an ion-conducting membrane sandwiched between two gas diffusion electrodes, at least one of which is a gas diffusion electrode of the invention. The membrane electrode assembly may also comprise a catalyst coated ion-conducting membrane with one catalyst layer, and on the opposite face of the ion-conducting membrane a gas diffusion electrode in which either or both of the catalyst layer and the gas diffusion electrode are of the invention.

Electrochemical devices in which the catalyst layer, gas diffusion electrode, catalysed membrane and membrane electrode assembly of the invention may be used include fuel cells, in particular proton exchange membrane. Accordingly, in a seventh aspect, the present invention provides a fuel cell comprising a catalyst layer according to the third aspect, a gas diffusion electrode according to the fourth aspect, a catalysed membrane according to the fifth aspect, or a membrane electrode assembly according to the sixth aspect. The fuel cell of the invention is preferably a proton exchange membrane fuel cell.

The proton exchange membrane fuel cell could be operating on hydrogen or a hydrogen-rich fuel at the anode or could be fuelled with a hydrocarbon fuel such as methanol. The catalyst layer, gas diffusion electrode, catalysed membrane and membrane electrode assembly of the invention may also be used in fuel cells in which the membranes use charge carriers other than protons, for example OH⁻ conducting membranes such as those available from Solvay Solexis S.p.A., FuMA-Tech GmbH.

The catalyst layer and gas diffusion electrode of the invention may also be used in other low temperature fuel cells that employ liquid ion conducting electrolytes, such as aqueous acids and alkaline solutions or concentrated phosphoric acid. Other electrochemical devices in which the catalyst layer, gas diffusion electrode, catalysed membrane and membrane electrode assembly of the invention may be used are as the anode electrode of regenerative fuel cells where the hydrogen oxidation and oxygen evolution reactions are both performed.

The oxygen evolution reaction catalyst of the invention may also be used in the anode of a proton exchange membrane electrolyser. Accordingly, in an eighth aspect, the present invention provides an anode catalyst layer for a proton exchange membrane electrolyser, the anode catalyst layer comprising an oxygen evolution reaction catalyst of the invention. In a ninth aspect, the present invention provides a proton exchange membrane electrolyser comprising the anode catalyst layer of the eight aspect of the invention. A skilled person will understand that there are similarities between such a catalyst layer and the catalyst layer of the third aspect of the invention and that any aspects discussed above regarding the catalyst layer of the third aspect of the invention which are compatible with the anode of a proton exchange membrane electrolyser are intended to apply to the catalyst layer of the eight aspect of the invention.

The invention includes the combination of the aspects and preferred features described except where such a combination is clearly impermissible or expressly avoided. Specifically, any aspect of the invention may be combined with any other aspect of the invention, unless the context demands otherwise. Any of the preferred or optional features of any aspect may be combined, singly or in combination, with any aspect of the invention, unless the context demands otherwise.

### Summary of the Figures

Embodiments and experiments illustrating the principles of the invention will now be discussed with reference to the accompanying figures in which:
**Figure 1** shows the X-ray diffraction pattern of an oxygen evolution reaction catalyst according to the present invention.
**Figure 2** shows a plot of current against cycle number in a wet cell for test buttons containing an oxygen evolution reaction catalyst of the invention and a comparative oxygen evolution reaction catalyst.

### Detailed Description of the Invention

Aspects and embodiments of the present invention will now be discussed with reference to the accompanying figures and examples. Further aspects and embodiments will be apparent to those skilled in the art. All documents mentioned in this text are incorporated herein by reference.

Two different materials were prepared and characterised: the first of these ('Example 1') is an oxygen evolution reaction catalyst according to the present invention. The second material ('Comparative Example 1') is an iridium tantalum mixed oxide oxygen evolution reaction catalyst as disclosed in WO11/021034.

As shown and discussed below, it was found that oxygen evolution reaction catalysts according to the present invention displayed slightly higher activity to the comparative material during wet cell testing, whilst offering benefits of iridium thrifting (due to lower iridium content), and improved stability.

### Example 1: Synthesis of a ternary mixed oxide material

The method of synthesis of the ternary mixed oxide according to this example can be split into three main steps:
1) Provision of an aqueous solution of compounds of iridium, ruthenium and tantalum;
2) Spray drying of resulting mixture; and
3) Calcination of product to form oxygen evolution reaction catalyst.

TaCl₅ (Alfa Aesar) was received in sealed ampoules of -100gms each. These were scored and the TaCl₅ powder poured into a glass bottle. The mass of TaCl₅ was measured to an accuracy of +/- 0.01g. 200ml of conc. HCl was measured out and poured into a separate glass bottle. The TaCl₅ was slowly dissolved in the conc. HCl under constant stirring. Using the measured mass of TaCl₅, IrCl₃ was weighed out to give a final Ir:Ta ratio of 6:3. It was then dissolved in a beaker containing 1400 ml of demineralised H₂O under constant stirring. Similarly, RuCl₃ was weighed out to give a final Ru:Ta ratio of 1:3. It was then dissolved into the solution in the beaker. This process was repeated, 4 more times, to obtain 5 separate bottles containing ~100g of TaCl₅ in 200 ml of conc. HCl and 5 corresponding beakers containing IrCl₃ and RuCl₃ dissolved in H₂O with a molar ratio of Ir:Ta:Ru (6:3:1).

Prior to spray drying, TaCl₅ (in conc. HCl) was mixed with its corresponding IrCl₃ and RuCl₃ (in demineralised H₂O) solution and stirred. This mixture was fed through a 5mm diameter silicone feed tube and 1.0ml nozzle and spray dried (GEA-Niro A/S mobile unit spray dryer) with an inlet temperature of 290 °C and an atomiser pressure of 2 bar with an air flow rate of 9 kg/hr +/-0.5 kg/hr. The resultant powder was collected in a powder bottle and this process is repeated for each TaCl₅/IrCl₃&RuCl₃ pair.

Each powder bottle containing dried Ir/Ta/Ru chlorides were placed into separate crucibles and calcined at a temperature of 500°C [ramp rate of 10°C min⁻¹] for 6 hours. The powder was then milled at 14000 RPM with a sieve mesh size of 0.08cm to break up agglomerates. The milled powder was further calcined for another 6 hours at 500°C [ramp rate of 10°C min⁻¹]. This process was repeated for each crucible and the final products of each blended on a roller.

### Comparative Example 1: Synthesis of a binary mixed oxide material

For comparison, an IrTa mixed oxide oxygen evolution reaction catalyst was prepared using a conventional method as disclosed in WO 2011/021034. Calcination was performed at a temperature of 500°C and the atomic percentages of iridium and tantalum were 70 and 30 respectively.

### X-Ray Diffraction analysis

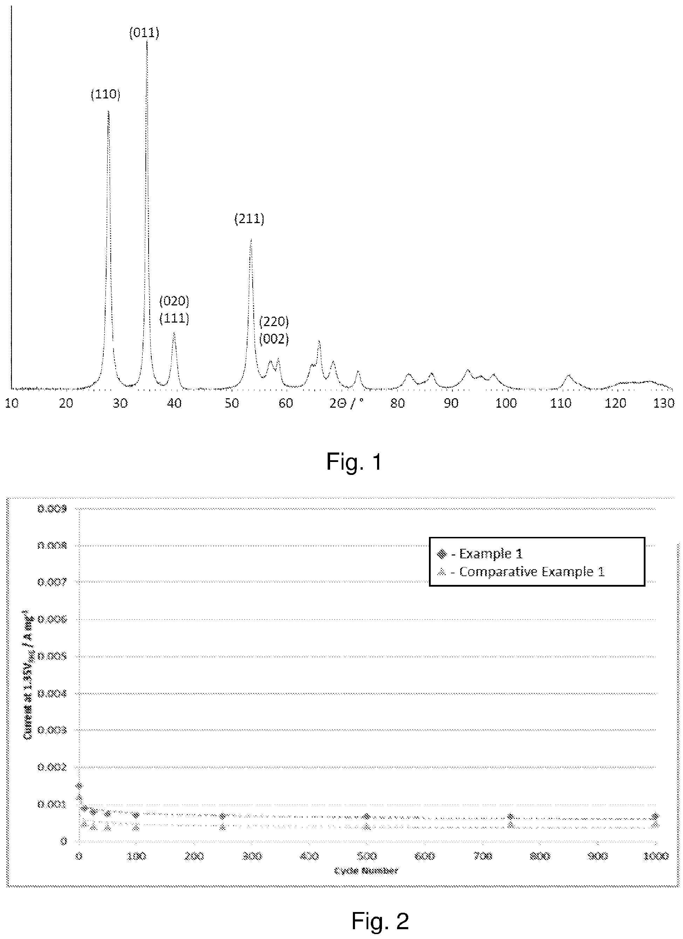

Fig. 1 shows the X-ray diffraction pattern of material produced according to Example 1.

### X-ray data collection

Powder X-ray diffraction (PXRD) data were collected in reflection geometry using a Bruker AXS D8 diffractometer using Cu Kα radiation (A = 1.5406 + 1.54439 Å) over the 10 < 2θ < 130° range in 0.04° steps. Phase identification was conducted using Bruker AXS Diffrac Eva V4.2 (2014) with reference to the PDF-4+ database, Release 2021. This showed that the material contains a single crystalline oxide phase with reflection intensities which are consistent with a rutile MO₂ phase but reflection positions which do not match IrO₂.

### Sample fitting

Pawley and peak phase refinements were performed using Topas[1] with reflection profiles modelled using a fundamental parameters approach[2] with reference data collected from NIST660 LaB₆. The data were fitted from 20 to 77 ° 2Θ using a Pawley model in *P*4₂/*mnm* (the same space group as IrO₂) to extract the lattice parameters. The data were separately fitted using a set of peaks with independent sample dependant broadening, for the rutile phase, to obtain crystallite sizes along a selection of crystallographic planes. Any amorphous material may be fitted using a separate set of peaks, to allow degree of crystallinity calculations. All crystallite sizes have been calculated using the volume weighted column height LVol-IB method.[3]

Table 1 provides the lattice parameters *a* and *c* obtained from the data collected on Example 1.

**Table 1**

| | |
|---|---|
| ***a* / Å** | 4.567(6) |
| ***c* / *Å*** | 3.158 (5) |

Table 2 provides crystallite size obtained from the (011) *hkl* reflection.

**Table 2**

| **(*hkl*)** | **Position** | **C.S./nm** |
|---|---|---|
| (011) | 34.498(11) | 11.3(3) |

### Preparation of Buttons for Wet Cell Testing

An ink of each catalyst was made by mixing 100mg of the catalyst with 12 wt% Nafion 1100 aqueous ionomer and 20 wt% IPA. This ink was subsequently diluted with 4 g of ultrapure water and sprayed directly onto sheet of Toray carbon paper teflonated with 6% PTFE. The target loading of the catalyst was 20µglr/cm² as measured using a Fischerscop XDV XRF. Disks were cut from this coated electrode using a 20 mm circular punch. These circular electrodes were submerged into a solution of 1M H₂SO₄ and put into a vacuum chamber, with the pressure reduced to 400 mbar for 45 minutes to impregnate the electrode with acid.

### Wet Cell Iridium Dissolution testing

The electrode was introduced as the working electrode into a standard 3 electrode electrochemical cell via a gold wire connector. The electrochemical cell had a Pd/C Reference electrode, a Pt Mesh counter electrode, with a 100ml volume and was heated to 60 °C using a heating jacket fed by a heated water-bath. The electrolyte was purged of oxygen by bubbling nitrogen gas through the electrolyte for at least 20 minutes. The potential of the working electrode was controlled using a potentiostat. First the BOL activity of the electrode towards the Oxygen Evolution Reaction (OER) was determined as a cyclic voltammogram was recorded by cycling the potential of the working electrode at 50mV/s scan rate from 0V - 1.35V- 0V vs RHE. Secondly, the potential of the electrode was cycled 1000 times using a triangular waveform at 100mV/s between 0.6V - 1.35V vs RHE. Finally, the EOL activity of the electrode towards the OER was determined as a cyclic voltammogram, recorded by cycling the potential of the working electrode at 50mV/s scan rate from 0V - 1.35V- 0V vs RHE. A 1 ml sample of the electrolyte was taken after the BOL CV and before the EOL CV, with the Ir concentration in the electrolyte measured by ICPMS.

Fig. 2 shows a plot of A/mg of iridium against cycle number in a wet cell for test buttons containing an oxygen evolution reaction catalyst of the invention Example 1 and a comparative oxygen evolution reaction catalyst Comparative Example 1. Cycling data for both Example 1 and Comparative Example 1 show an initial decay in oxidation current in the first 50-100 cycles, followed by consistent currents for the remaining cycles. This suggests after initial catalyst decay a material with very stable activity is formed in both cases.

### Wet cell Activity Testing

The electrode was introduced as the working electrode into a standard 3 electrode electrochemical cell via a gold wire connector. The electrochemical cell had a Pd/C reference electrode, a Pt mesh counter electrode, with a 100ml volume and was heated to 60 °C using a heating jacket fed by a heated water-bath. The electrolyte was purged of oxygen by bubbling nitrogen gas through the electrolyte for at least 20 minutes. The potential of the working electrode was controlled using a potentiostat. The activity of the electrode towards the OER was determined as a linear sweep voltammogram was recorded by sweeping the potential of the working electrode at 1mV/s from 1V - 1.55V- 0V vs RHE.

Chart 1 shows the oxygen evolution reaction overpotential of an oxygen evolution reaction catalyst of the invention Example 1 and a comparative oxygen evolution reaction catalyst Comparative Example 1. The overpotentials are similar and so the oxygen evolution reaction catalyst of the invention is as active as Comparative Example 1, and iridium can be thrifted with the maintenance of stable activity.

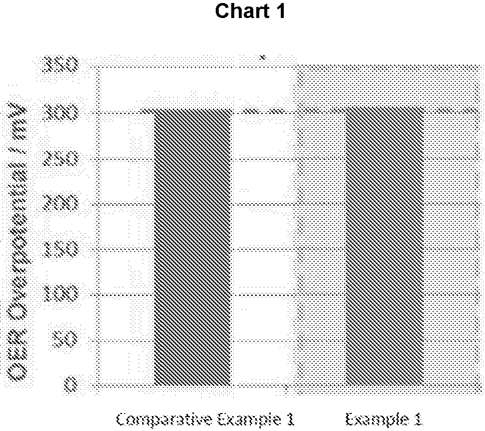

### BET Surface area analysis

The BET surface area of the oxide material produced in Example 1 was measured as 40.3 m²/g. The BET surface area was determined based on the N₂ adsorption isotherm at 77K, according to ISO standard 9277:2010(en).

### References

1. Topas v4.2 / v5.0: General Profile and Structure Analysis Software for Powder Diffraction Data, Bruker AXS, Karlsruhe, Germany, (2003-2015).
2. R.W. Cheary and A. Coelho, J. Appl. Cryst. (1992), 25, 109-121
3. F. Bertaut and P. Blum (1949) C.R. Acad. Sci. Paris 229, 666

## Claims

1. An oxygen evolution reaction catalyst, wherein the oxygen evolution reaction catalyst is an oxide material comprising iridium, tantalum and ruthenium:
wherein the oxygen evolution catalyst comprises a crystalline oxide phase having the rutile crystal structure;
wherein the crystalline oxide phase has a lattice parameter a of greater than 4.510 Å;
wherein the crystalline oxide phase is a single oxide structure comprising iridium, tantalum and ruthenium; and
wherein ruthenium is present in an amount in the range of and including 1 to 15 atomic % based on the total atomic composition of iridium, tantalum and ruthenium species in the oxygen evolution reaction catalyst; and
wherein iridium is present in an amount in an amount of less than 70 atomic % based on the total atomic composition of iridium, tantalum and ruthenium species in the oxygen evolution reaction catalyst.

2. The oxygen evolution reaction catalyst of claim 1, wherein the oxygen evolution reaction catalyst has a BET surface area of at least 30 m²/g.

3. A method of synthesis of the oxygen evolution reaction catalyst according to any one of claims 1 to 3, the method comprising steps of:
providing an aqueous solution of compounds of iridium, tantalum and ruthenium;
spray drying the solution to form a dry powder; and
subjecting said powder to calcination to thereby form the oxygen evolution reaction catalyst.

4. The method of claim 3, wherein the step of providing an aqueous solution of compounds of iridium, tantalum and ruthenium comprises sub-steps of:
providing an aqueous solution of a compound of iridium and a compound of ruthenium; and
mixing said aqueous solution with an aqueous solution of a compound of tantalum.

5. The method of claim 3 or claim 4, wherein the aqueous solution of compounds of iridium, tantalum and ruthenium has a molar ratio Ir : Ta : Ru of 5 to 7 : 2 to 4 : 0.5 to 1.5).

6. The method according to any one of claims 3 to 5, wherein calcination is performed at a temperature in the range of and including 400 °C to 800 °C.

7. A catalyst layer comprising the oxygen evolution reaction catalyst of any one of claims 1 to 2 and a second electrocatalyst material.

8. The catalyst layer of claim 7, wherein the cathode layer is an anode catalyst layer, optionally an anode catalyst layer for a proton exchange membrane fuel cell.

9. The catalyst layer of claim 7 or claim 8, wherein the second electrocatalyst material is selected from:
the platinum group metals (platinum, palladium, rhodium, ruthenium, iridium and osmium);
gold or silver;
a base metal; or
an alloy or mixture comprising one or more of these metals or their oxides.

10. The catalyst layer of any one of claims 7 to 9, wherein the weight ratio of the oxygen evolution reaction catalyst to the second electrocatalyst material in the catalyst layer is from 10:1 to 1:10.

11. A gas diffusion electrode comprising a gas diffusion layer and a catalyst layer as claimed in any one of claims 7 to 10.

12. A catalysed membrane comprising an ion-conducting membrane and a catalyst layer as claimed in any one of claims 7 to 10.

13. A membrane electrode assembly comprising a catalyst layer as claimed in any one of claims 7 to 10, a gas diffusion electrode as claimed in claim 11, or a catalysed membrane as claimed in claim 12.

14. A fuel cell comprising a catalyst layer as claimed in any one of claims 7 to 10, a gas diffusion electrode as claimed in claim 11, a catalysed membrane as claimed in claim 12, or a membrane electrode assembly as claimed in claim 13.

## Patentansprüche

1. Sauerstoffentwicklungsreaktionskatalysator, wobei der Sauerstoffentwicklungsreaktionskatalysator ein Oxidmaterial, umfassend Iridium, Tantal und Ruthenium, ist:
wobei der Sauerstoffentwicklungskatalysator eine kristalline Oxidphase, die die Rutilkristallstruktur aufweist, umfasst;
wobei die kristalline Oxidphase einen Gitterparameter a von über 4,510 Å aufweist;
wobei die kristalline Oxidphase eine einzelne Oxidstruktur, umfassend Iridium, Tantal und Ruthenium, ist; und
wobei Ruthenium in einer Menge in dem Bereich von und einschließlich 1 bis 15 Atom-%, bezogen auf die gesamte atomare Zusammensetzung von Iridium-, Tantal- und Rutheniumspezies, in dem Sauerstoffentwicklungsreaktionskatalysator vorhanden ist; und
wobei Iridium in einer Menge von weniger als 70 Atom-%, bezogen auf die gesamte atomare Zusammensetzung von Iridium-, Tantal- und Rutheniumspezies, in dem Sauerstoffentwicklungsreaktionskatalysator vorhanden ist.

2. Sauerstoffentwicklungsreaktionskatalysator nach Anspruch 1, wobei der Sauerstoffentwicklungsreaktionskatalysator eine BET-Fläche von mindestens 30 m²/g aufweist.

3. Verfahren für Synthese des Sauerstoffentwicklungsreaktionskatalysators nach einem der Ansprüche 1 bis 3, das Verfahren umfassend die Schritte:
Bereitstellen einer wässrigen Lösung von Verbindungen von Iridium, Tantal und Ruthenium;
Sprühtrocknen der Lösung, um ein trockenes Pulver zu bilden; und
Unterziehen des Pulvers einer Kalzinierung, um dadurch den Sauerstoffentwicklungsreaktionskatalysator zu bilden.

4. Verfahren nach Anspruch 3, wobei der Schritt des Bereitstellens einer wässrigen Lösung von Verbindungen von Iridium, Tantal und Ruthenium die Teilschritte umfasst:
Bereitstellen einer wässrigen Lösung einer Verbindung von Iridium und einer Verbindung von Ruthenium; und
Mischen der wässrigen Lösung mit einer wässrigen Lösung einer Verbindung von Tantal.

5. Verfahren nach Anspruch 3 oder 4, wobei die wässrige Lösung von Verbindungen von Iridium, Tantal und Ruthenium ein Molverhältnis von Ir: Ta: Ru von 5 zu 7 : 2 bis 4 : 0,5 zu 1,5) aufweist.

6. Verfahren nach einem der Ansprüche 3 bis 5, wobei die Kalzinierung bei einer Temperatur in dem Bereich von und einschließlich 400 °C bis 800 °C durchgeführt wird.

7. Katalysatorschicht, umfassend den Sauerstoffentwicklungsreaktionskatalysator nach einem der Ansprüche 1 bis 2 und ein zweites Elektrokatalysatormaterial.

8. Katalysatorschicht nach Anspruch 7, wobei die Kathodenschicht eine Anodenkatalysatorschicht, optional eine Anodenkatalysatorschicht für eine Protonenaustauschmembran-Brennstoffzelle, ist.

9. Katalysatorschicht nach Anspruch 7 oder 8, wobei das zweite Elektrokatalysatormaterial ausgewählt ist aus:
den Platingruppenmetallen (Platin, Palladium, Rhodium, Ruthenium, Iridium und Osmium);
Gold oder Silber;
einem unedlen Metall oder
einer Legierung oder Mischung, umfassend eines oder mehrere dieser Metalle oder ihrer Oxide.

10. Katalysatorschicht nach einem der Ansprüche 7 bis 9, wobei das Gewichtsverhältnis des Sauerstoffentwicklungsreaktionskatalysators zu dem zweiten Elektrokatalysatormaterial in der Katalysatorschicht von 10 : 1 bis 1 : 10 beträgt.

11. Gasdiffusionselektrode, umfassend eine Gasdiffusionsschicht und eine Katalysatorschicht nach einem der Ansprüche 7 bis 10.

12. Katalysierte Membran, umfassend eine ionenleitende Membran und eine Katalysatorschicht nach einem der Ansprüche 7 bis 10.

13. Membran-Elektroden-Anordnung, umfassend eine Katalysatorschicht nach einem der Ansprüche 7 bis 10, eine Gasdiffusionselektrode nach Anspruch 11 oder eine katalysierte Membran nach Anspruch 12.

14. Brennstoffzelle, umfassend eine Katalysatorschicht nach einem der Ansprüche 7 bis 10, eine Gasdiffusionselektrode nach Anspruch 11, eine katalysierte Membran nach Anspruch 12 oder eine Membran-Elektroden-Anordnung nach Anspruch 13.

## Revendications

1. Catalyseur de réaction de dégagement d'oxygène, dans lequel le catalyseur de réaction de dégagement d'oxygène est un matériau d'oxyde comprenant de l'iridium, du tantale et du ruthénium :
dans lequel le catalyseur de dégagement d'oxygène comprend une phase d'oxyde cristalline ayant la structure cristalline du rutile ;
dans lequel la phase d'oxyde cristalline a un paramètre de réseau a supérieur à 4,510 Å ;
dans lequel la phase d'oxyde cristalline est une structure d'oxyde unique comprenant de l'iridium, du tantale et du ruthénium ; et
dans lequel le ruthénium est présent en une quantité comprise dans la plage de 1 à 15 % atomiques, bornes incluses, en fonction de la composition atomique totale des espèces d'iridium, de tantale et de ruthénium dans le catalyseur de réaction de dégagement d'oxygène ; et
dans lequel l'iridium est présent en une quantité inférieure à 70 % atomiques en fonction de la composition atomique totale des espèces d'iridium, de tantale et de ruthénium dans le catalyseur de réaction de dégagement d'oxygène.

2. Catalyseur de réaction de dégagement d'oxygène selon la revendication 1, dans lequel le catalyseur de réaction de dégagement d'oxygène a une surface BET d'au moins 30 m²/g.

3. Procédé de synthèse du catalyseur de réaction de dégagement d'oxygène selon l'une quelconque des revendications 1 à 3, le procédé comprenant les étapes consistant à :
fournir une solution aqueuse de composés d'iridium, de tantale et de ruthénium ;
sécher par atomisation la solution afin de former une poudre sèche ; et
soumettre ladite poudre à une calcination, permettant ainsi de former le catalyseur de réaction de dégagement d'oxygène.

4. Procédé selon la revendication 3, dans lequel l'étape consistant à fournir une solution aqueuse de composés d'iridium, de tantale et de ruthénium comprend des sous-étapes consistant à :
fournir une solution aqueuse d'un composé d'iridium et d'un composé de ruthénium ; et
mélanger ladite solution aqueuse avec une solution aqueuse d'un composé de tantale.

5. Procédé selon la revendication 3 ou la revendication 4, dans lequel la solution aqueuse de composés d'iridium, de tantale et de ruthénium a un rapport molaire Ir: Ta: Ru de 5 à 7: 2 à 4: 0,5 à 1,5).

6. Procédé selon l'une quelconque des revendications 3 à 5, dans lequel la calcination est effectuée à une température comprise dans la plage de 400 °C à 800 °C, bornes incluses.

7. Couche de catalyseur comprenant le catalyseur de réaction de dégagement d'oxygène selon l'une quelconque des revendications 1 à 2 et un second matériau électrocatalyseur.

8. Couche de catalyseur selon la revendication 7, dans laquelle la couche de catalyseur est une couche de catalyseur d'anode, facultativement une couche de catalyseur d'anode pour une pile à combustible à membrane échangeuse de protons.

9. Couche de catalyseur selon la revendication 7 ou la revendication 8, dans laquelle le second matériau électrocatalyseur est choisi parmi :
les métaux du groupe du platine (platine, palladium, rhodium, ruthénium, iridium et osmium) ;
l'or ou l'argent ;
un métal de base ; ou
un alliage ou mélange comprenant un ou plusieurs de ces métaux ou leurs oxydes.

10. Couche de catalyseur selon l'une quelconque des revendications 7 à 9, dans laquelle le rapport pondéral du catalyseur de réaction de dégagement d'oxygène au second matériau électrocatalyseur dans la couche de catalyseur va de 10:1 à 1:10.

11. Électrode à diffusion de gaz comprenant une couche de diffusion de gaz et une couche de catalyseur selon l'une quelconque des revendications 7 à 10.

12. Membrane catalysée comprenant une membrane conductrice d'ions et une couche de catalyseur selon l'une quelconque des revendications 7 à 10.

13. Ensemble membrane-électrode comprenant une couche de catalyseur selon l'une quelconque des revendications 7 à 10, une électrode à diffusion de gaz selon la revendication 11, ou une membrane catalysée selon la revendication 12.

14. Pile à combustible comprenant une couche de catalyseur selon l'une quelconque des revendications 7 à 10, une électrode à diffusion de gaz selon la revendication 11, une membrane catalysée selon la revendication 12, ou un ensemble membrane-électrode selon la revendication 13.
